**Europäisches Patentamt**

**European Patent Office**

**Office européen des brevets**

(11) Veröffentlichungsnummer: **0 011 285**
**A1**

(12) # EUROPÄISCHE PATENTANMELDUNG

(21) Anmeldenummer: **79104490.2**

(22) Anmeldetag: **14.11.79**

(51) Int. Cl.³: **E 01 B 7/02**

(30) Priorität: **18.11.78 DE 2850088**

(43) Veröffentlichungstag der Anmeldung:
**28.05.80 Patentblatt 80/11**

(84) Benannte Vertragsstaaten:
**AT BE CH FR NL SE**

(71) Anmelder: **Ensinger, Wilfried**
**Gottlieb-Daimler-Strasse**
**D-7031 Nufringen(DE)**

(72) Erfinder: **Ensinger, Wilfried**
**Gottlieb-Daimler-Strasse**
**D-7031 Nufringen(DE)**

(74) Vertreter: **Hoeger, Stellrecht & Partner et al,**
**Uhlandstrasse 14c**
**D-7000 Stuttgart-1(DE)**

(54) **Kunststoffgleitbelag für Schienenweichen.**

(57) Die Erfindung betrifft einen Kunststoffgleitbelag für Schienenweichen, bei denen eine Weichenzunge (5) im unbelasteten Zustand der Weiche auf einem Gleitelement (6) aus Kunststoff relativ zu einer Schiene (1) gleitend hin- und herverschieblich und im unbelasteten Zustand der Weiche die belastende Kraft in das Gleitelement (6) aus Kunstoff eingeleitet ist. Um bei solchen Weichen Formveränderungen des Kunststoff-Gleitelementes (6), die zu einem Blockieren der Weiche führen können, zu verhindern, wird erfindungsgemäß vorgeschlagen, daß unter dem Kunststoff-Gleitelement (6) ein elastisches Dämpfungselement (7) angeordnet ist.

Fig. 1

HOGER - STELLRECHT - GRIESSBACH - HAECKER
PATENTANWÄLTE IN STUTTGART

0011285

A 00 15 m
A 43 o76 m
m - 17o
24. Oktober 1978

Anmelder: Herr Wilfried Ensinger
Gottlieb-Daimler-Str.
7031 Nufringen

B e s c h r e i b u n g

Kunststoffgleitbelag für Schienenweichen

Die Erfindung betrifft einen Kunststoffgleitbelag für Schienenweichen, bei denen eine Weichenzunge auf einem Gleitelement
aus Kunststoff relativ zu einer Schiene gleitend hin- und herverschieblich ist.

Bei den bekannten Kunststoffgleitbelägen für Schienenweichen
dieser Art (DE-PS 26 31 594) ruht das Kunststoff-Gleitelement
unmittelbar auf einer starren Unterlage, gewöhnlich dem Weichenstuhl, auf. Beim Befahren der Weiche durch Züge erfährt das
Gleitelement eine ständige Behämmerung durch die darüberrollenden Achsen. Gleichzeitig wird durch das Bestreben des Spurkranzes der Räder, auf die kurvenäußere Weichenzunge "aufklettern" zu wollen, eine oszillierende Relativbewegung der
Weichenzunge in radialer Richtung der Kurve hervorgerufen.
Diese Beanspruchungen führen über kurz oder lang zu einem
"Aushämmern" des Kunststoff-Gleitbelages, das soweit gehen
kann, daß der Kunststoff abblättert oder eine bleibende Verformung erfährt. Hierdurch wiederum geht die für eine leichte
Verstellung der Weichenzunge erforderliche, ebene Oberfläche
des Kunststoff-Gleitbelages verloren. Es kann durch die beschriebenen Beanspruchungen sogar zu einer Art "Formschluß"
zwischen Gleitelement und Weichenzunge kommen, die eine Ver-

- 2 -

A 43 o76 m
m - 17o
24. Oktober 1978                  - 2 -

0011285

stellbewegung unter Umständen überhaupt in Frage stellt, was natürlich aus Sicherheitsgründen nicht hingenommen werden kann.

Es ist Aufgabe der Erfindung, Formveränderungen des Kunststoff-Gleitelements bei Schienenweichen zu verhindern.

Die Aufgabe wird erfindungsgemäß dadurch gelöst, daß unter dem Kunststoff-Gleitelement ein elastisches Dämpfungselement angeordnet ist.

Aufgrund der erfindungsgemäßen Maßnahme kann das Gleitelement bei einer durch darüberrollende Achsen hervorgerufenen Behämmerung nach unten ausweichen, wodurch nachteilige Formveränderungen der ebenen Oberfläche des Gleitelements verhütet werden können.

Die nachstehende Beschreibung bevorzugter Ausführungsformen der Erfindung dient im Zusammenhang mit beiliegender Zeichnung der weiteren Erläuterung. Es zeigen:

Fig. 1       eine Schnittansicht einer Schienenweiche mit Kunststoff-Gleitbelag;

Fig. 2       eine Draufsicht eines Kunststoff-Gleitbelages;

Fig. 3       eine Schnittansicht entlang der Linie 3-3 in Fig. 2;

Fig. 4       eine andere Ausführungsform eines Kunststoff-Gleitbelages;

- 3 -

Fig. 5      eine weiterhin abgewandelte Ausführungsform eines Kunststoff-Gleitbelages;

Fig. 6      eine Schnittansicht entlang der Linie
            6-6 in Fig. 5;

Fig. 7      eine modifizierte Ausführungsform eines
            Kunststoff-Gleitbelages;

Fig. 8      ein Kunststoff-Gleitelement mit elastischen
            Dämpfungselementen;

Fig. 9      eine Ansicht entlang des Pfeiles A in

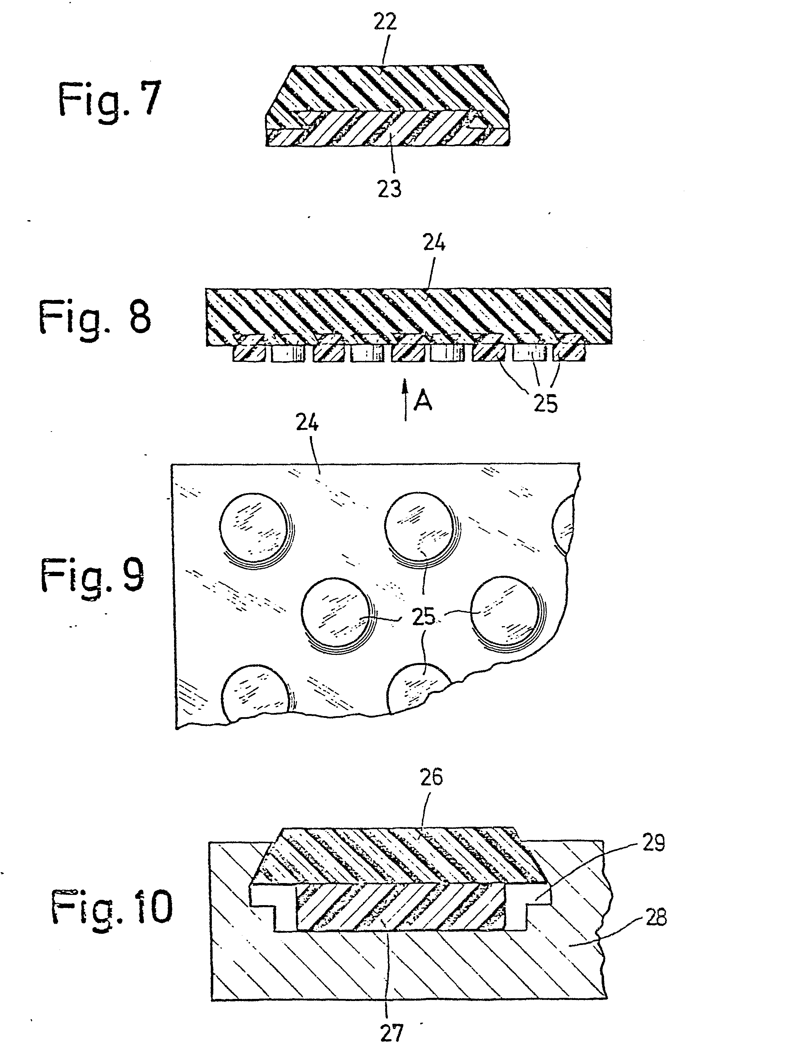

            Fig. 8 und

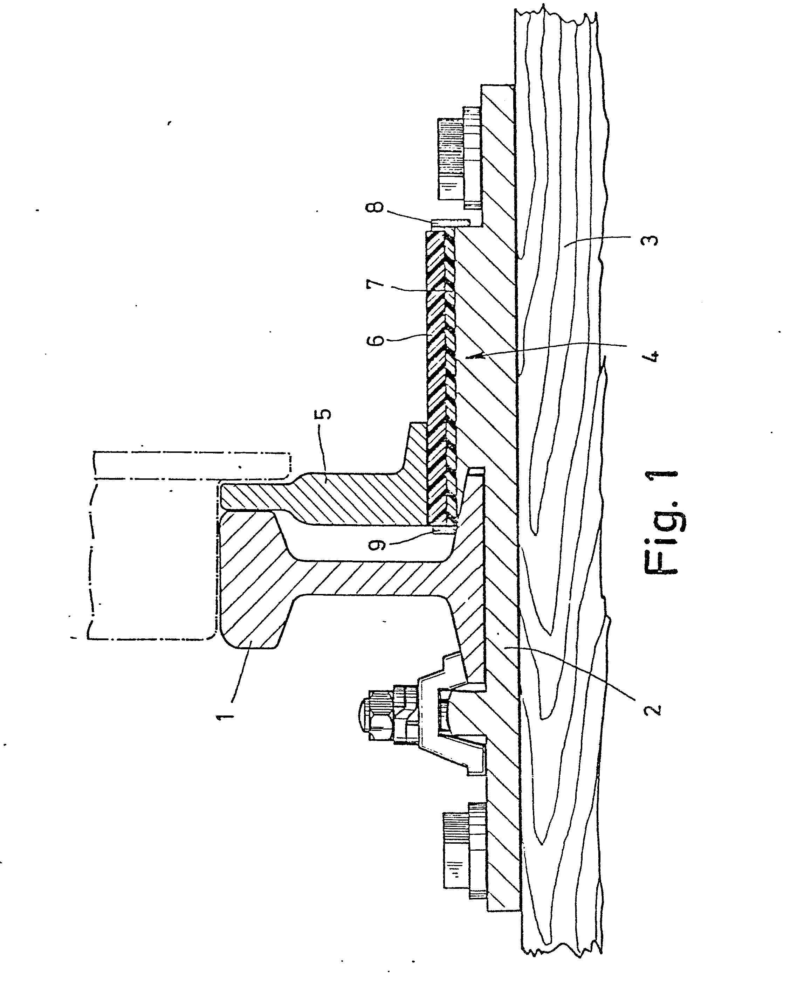

Fig. 1o     eine andere Ausführungsform eines Kunststoff-Gleitbelages mit Gehäuse.

Bei der in Figur 1 im Schnitt gezeigten Schienenweiche ist eine
(Eisenbahn-) Schiene 1 unter Zwischenschaltung einer Eisenplatte
2 auf einer Schwelle 3 aus Holz, Beton oder anderem Material
in herkömmlicher Weise befestigt. Mit der Platte 2 ist - bei
der dargestellten Ausführungsform einstückig - ein Weichenstuhl
4 fest verbunden. Eine Weichenzunge 5 ist mittels eines (nicht
dargestellten) Gestänges in der üblichen Weise auf dem Weichenstuhl 4 relativ zur Schiene 1 hin- und herverschieblich, wobei
Fig. 1 die sogenannte "Schließstellung" der Weiche zeigt.

Wie dargestellt, gleitet die Weichenzunge 5 auf einem plattenförmigen Kunststoff-Gleitelement 6 mit ebener Oberfläche. Zwischen der Unterseite des Gleitelements 6 und dem Weichenstuhl 4

- 4 -

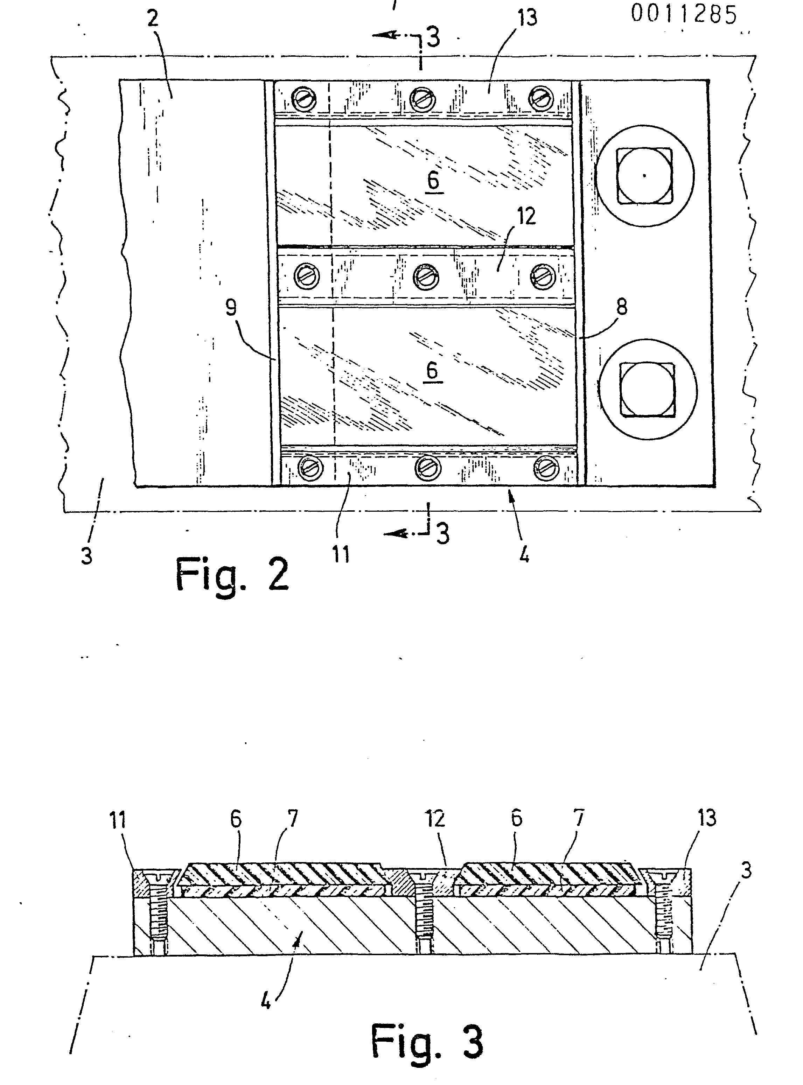

ist ein elastisches Dämpfungselement 7, ebenfalls in Gestalt
einer Platte, angeordnet. An ihren Stirnseiten sind das Gleitelement 6 und das Dämpfungselement 7 von Leisten 8, 9 gehalten,
die fest mit dem Weichenstuhl 4 verbunden sind. An den Längsseiten - vergleiche Fig. 2 und 3 - sind die genannten Elemente
6, 7 von entsprechend geformten, aufgeschraubten Leisten 11,
12, 13 mit Schrägflächen umschlossen. Zwischen den Leisten
und den Kunststoff- bzw. Dämpfungselementen sind Freiräume vorgesehen, um den Elementen ein gewisses Spiel zu geben.

Durch die beschriebene elastische "Polsterung" des Kunststoff-
Gleitelements 6 kann dieses beim Behämmern der Weiche durch
darüberrollende Züge elastisch ausweichen, wodurch die Weichenzunge 5 keine bleibenden Formänderungen an der ebenen Oberfläche des Elements 6 hervorrufen kann. Weiterhin wird durch
das elastische Dämpfungselement 7 der Vorteil erreicht, daß
wegen der elastischen Abstützung der Weichenzunge 5 ein gleichmäßiger Anpressdruck auf dieselbe erreicht ist, was wiederum
die Voraussetzung für eine wartungsfreie Weiche und deren wirtschaftlichen Betrieb ist.

Wie dargestellt und beschrieben, sind das Kunststoff-Gleitelement und das elastische Dämpfungselement zu einer Art Verbundkörper vereinigt, der unter Berücksichtigung einer freien Dehnbarkeit im Weichenstuhl eingekammert ist. Die Verbindung der
beiden Elemente 6 und 7 kann auf verschiedene Arten erfolgen,
insbesondere durch Reibschluß (gemeinsames Verspannen der beiden Elemente), Stoffschluß (Verklebung) oder Formschluß.

Als Werkstoffe für das Kunststoff-Gleitelement und das elastische Dämpfungselement werden bevorzugt Materialien mit einander
möglichst gleichen Wärmeausdehnungskoefizienten verwendet, z. B. für das Gleitelement ein thermoplastischer (linearer)
Polyester und für das Dämpfungselement ein thermoplastisches
Polyesterelastomer oder für das Gleitelement ein modifizierter,
thermoplastischer linearer Polyester und für das Dämpfungselement ein elastomeres Polyurethan auf der Basis von Polyesteralkohol und Naphthylendiisocyanat.

Das Dämpfungselement hat bevorzugt eine Shorehärte 78 A bis
96 A oder 45 D bis 73 D.

In diesen Bereichen reicht die Elastizität auch bei in der
Praxis auftretenden Temperaturänderungen voll aus. Erfindungsgemäß kann auch in Betracht gezogen werden, feste oder flüssige
Dämpfungselemente in entsprechender Abkap-selung zu verwenden.
In diesem Fall wird die Viskosität passend ausgewählt.

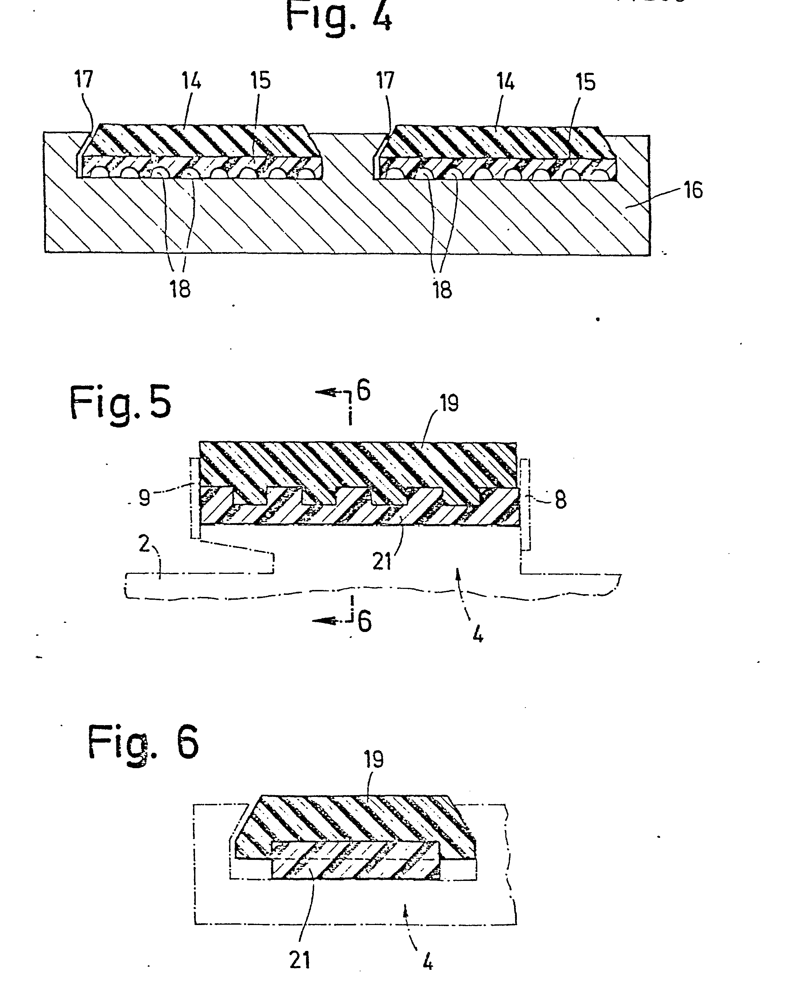

Fig. 4 zeigt eine besonders bevorzugte Ausführungsform eines
erfindungsgemäßen Kunststoff-Gleitbelags. Bei diesem Belag
sind ein oder mehrere Gleitelemente 14 von im wesentlichen
schwalbenschwanzförmiger Querschnittsform zusammen mit Dämpfungselementen 15 in einem Gehäuse 16 aus Metall unter Freilassung entsprechender, der Wärmeausdehnung des Gleitelements
dienender Freiräume 17 eingekammert. Diese Einheit ist besonders
marktgerecht und lässt sich auswechselbar besonders bequem auf
einem Weichenstuhl befestigen. Wie dargestellt, sind an der Unterseite der elastischen Dämpfungselemente 15 z. B. rillenartige
Hohlräume 18 vorgesehen. Diese Hohlräume 18 führen beim Zusammenpressen der Dämpfungselemente zu einem progressiven Dämpfungsverhalten (progressive Federkennlinie). Die Elemente 14
und 15 können beispielsweise miteinander verklebt sein.

Bei der Ausführungsform gemäß Fig. 5 und 6 ist ein Kunststoff-Gleitelement 19 mit einem elastischen Dämpfungselement 21 durch Formschluß verbunden und mittels Metalleisten 8, 9 in einem Weichenstuhl 4 eingekammert. Figur 7 zeigt eine weitere, mögliche Ausführung eines formschlüssigen Verbundes zwischen einem Gleitelement 22 und einem Dämpfungselement 23 in Gestalt einer Schwalbenschwanz-Verbindung.

Bei der Ausführungsform entsprechend der Figur 8 und 9 sind in ein Kunststoff-Gleitelement 24 mit ebener Oberfläche von unten her einzelne, kreisscheibenförmige, elastische Dämpfungselemente 25 formschlüssig eingesetzt. Der Vorteil dieser Ausführungsform besteht darin, daß zwischen den einzelnen, elastischen Dämpfungselementen 25 ausreichend Verformungsraum zur Verfügung steht.

In Figur 1o sind wiederum ein Kunststoff-Gleitelement 26 mit schwalbenschwanzförmigem Querschnitt und ein elastisches Dämpfungselement 27 in ein Metallgehäuse 28 als kompakte Baueinheit eingespannt. Ein Hohlraum 29 im Gehäuse 28 umfängt einerseits das Gleitelement 26 und dient andererseits der Aufnahme mehrachsiger Spannungszustände bei Wärmeausdehnung des Gleitelements.

Wie oben bereits erwähnt, kann als Dämpfungselement auch ein entsprechend eingekapselter, nach Art eines Stoßdämpfers wirkender Gas- oder Flüssigkeitskörper verwendet werden. Auch die Verwendung mechanischer Federn als elastisches Dämpfungselement ist möglich.

- 7 -

Die beschriebenen Dämpfungselemente, z. B. 7, können statt
zwischen Weichenstuhl 4 und Weichenzunge 5 auch zwischen
Schwelle 3 und Weichenstuhl 4 bzw. einer Weichengleitplatte
angeordnet werden.

Außer den beschriebenen und gezeichneten Zweielementen-Systemen
wäre es erfindungsgemäß auch möglich, einen gemischtzelligen
Hartschaum als Gleit- und Dämpfungselement als eine Einheit zu
verwenden. Die teilweise offenen Zellen könnten als Taschen
einem Dauerschmiermittel, welches bereits eingearbeitet ist,
dienen.

Als Einbauregeln hinsichtlich formschlüssiger Verbindung unter
Berücksichtigung der freien Dehnbarkeit, wären die bekannten
Gestaltungsrichtlinien zu beachten. Möglich ist auch, daß ein
Raum im Weichenstuhl ausgeschäumt wird. Das Volumen des Hartschaumelementes und die Geometrie wird dabei nach der Zungenunterseite hin durch ein Werkzeug bestimmt.

0011285

A 00 15 m
A 43 o76 m
m – 17o
24. Oktober 1978

Anmelder: Herr Wilfried Ensinger
Gottlieb-Daimler-Str.
7o31 Nufringen

## P a t e n t a n s p r ü c h e :

1. Kunststoffgleitbelag für Schienenweichen, bei denen eine Weichenzunge im unbelasteten Zustand der Weiche auf einem Gleitelement aus Kunststoff relativ zu einer Schiene gleitend hin- und herverschieblich und im belasteten Zustand der Weiche die belastende Kraft in das Gleitelement aus Kunststoff eingeleitet ist, dadurch gekennzeichnet, daß unter dem Kunststoff-Gleitelement (6) ein elastisches Dämpfungselement (7) angeordnet ist.

2. Gleitbelag nach Anspruch 1, dadurch gekennzeichnet, daß das Dämpfungselement (7) aus thermoplastischem oder elastomerem Werkstoff besteht.

3. Gleitbelag nach Anspruch 1 oder 2, dadurch gekennzeichnet, daß das Dämpfungselement (7) gemeinsam mit dem Gleitelement (6) auf einem Weichenstuhl (4) festgespannt ist.

4. Gleitbelag nach Anspruch 1, 2 oder 3, dadurch gekennzeichnet, daß das Dämpfungselement (7) mit dem Gleitelement (6) durch Stoff- oder Formschluß verbunden ist.

5. Gleitbelag nach einem der Ansprüche 1 bis 4, dadurch gekennzeichnet, daß mit einem Gleitelement (24) einzelne, elastische Dämpfungselemente (25) verbunden und zwischen den Dämpfungselementen (25) Freiräume vorgesehen sind.

6. Gleitbelag nach einem der voranstehenden Ansprüche, dadurch
   gekennzeichnet, daß das elastische Dämpfungselement (15)
   mit Verformungshohlräumen (18) versehen ist.

7. Gleitbelag nach einem der voranstehenden Ansprüche, dadurch
   gekennzeichnet, daß das Dämpfungselement (15, 27) und Gleitelement (14, 26) in einem auswechselbaren Gehäuse (16, 28)
   angeordnet sind.

8. Gleibelag nach Anspruch 7, dadurch gekennzeichnet, daß im
   Gehäuse Freiräume (17, 29) zur Wärmeausdehnung ausgespart
   sind.

9. Gleitbelag nach einem der voranstehenden Ansprüche, dadurch
   gekennzeichnet, daß das Dämpfungselement (7) unter einem
   Weichenstuhl (4) angeordnet ist.

1o. Gleitbelag nach einem der voranstehenden Ansprüche, dadurch
    gekennzeichnet, daß das Dämpfungselement (7) nach Art eines
    Stoßdämpfers einen Gas- oder Flüssigkeitskörper umfasst.

0011285

Fig. 1

Herr Wilfried Ensinger, Gottlieb-Daimler-Str. , 7031 Nufringen/Böbl.

HÖGER - STELLRECHT - GRIESSBACH - HAECKER
A 0015 m
A 43 076 t

0011285

Fig. 2

Fig. 3

HÖGER – STELLRECHT – GRIESSBACH – HAECKER A 43 076 r
PATENTANWÄLTE IN STUTTGART

## Fig. 4

17  14  15     17  14  15

16

18          18

## Fig. 5

6

19

9          8

2          21

6          4

## Fig. 6

19

21  4

0011285

Fig. 7

22

23

Fig. 8

24

A

25

Fig. 9

24

25

Fig. 10

26

29

28

27

HÖGER – STELLRECHT – GRIESSBACH – HAECKER A 43 076 n

# EUROPÄISCHER RECHERCHENBERICHT

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE – A1 – 2 729 692 (GESTIVALMO S.A. HOLDING) <br> * ganzes Dokument * <br> –– | 1–3, 10 | E 01 B  7/02 |
| X | DE – A1 – 2 705 122 (H.H. FAIGLE) <br> * Anspruch 3; Seite 9, Absatz 2; Seite 16, Absatz 2 bis Seite 17, Absatz 1; Fig. 4 * <br> –– | 1 | |
| P,X | FR – A1 – 2 398 841 (STECMA) <br> * ganzes Dokument * <br> –– | 1–3 | **RECHERCHIERTE SACHGEBIETE (Int. Cl.3)** <br><br> E 01 B  7/00 |
| | DE – C – 1 142 378 (KLÖCKNER-WERKE AG) <br> * ganzes Dokument * <br> –– | 1,9 | |
| A,D | DE – C2 – 2 631 594 (W. ENSINGER) <br> * Fig. 1 bis 8 * <br> –– | | |
| A | AT – B – 25 910 (K. KÖNIG) <br> * ganzes Dokument * <br> –––– | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 14-02-1980 | PAETZEL |

EPA form 1503.1  06.78